# EUROPEAN PATENT APPLICATION

(11) **EP 2 724 886 A1**
(43) Date of publication of application: **30.04.2014**
(21) Application number: 12189799.5
(22) Date of filing: 24.10.2012
(51) Int. Cl.: B60L 11/18

(54) **Energy storage exchange system**

(71) Applicant: GreenWay Operator a.s., 831 04 Bratislava (SK)
(72) Inventor: Sola , Martin, 768 61 Byst ice pod Hostýnem (CZ); Bisták, Igor, 01701 Pova ská Bystrica (SK); Lazový, Peter, 01861 Belu a (SK)
(74) Representative: Litvakova, Lenka

(57) **Abstract**

Energy storage exchange system designed for use mainly for electric vehicles with exchangeable energy storages, where the energy storage exchange is realized manually. System includes a communication system comprising a central (1) with central computer, control computer (2) of an exchange station, a vehicle communication module (3); at least one exchange station comprising at least one parking place, at least one energy storage, at least one forklift for manual energy storage exchange, electrical peripheral devices, which are at least one energy storage frame containing charging device and at least one charging slot and an energy storage support frame designed for connection with vehicle. The central computer of the central (1) is equipped with a software for collecting the data from vehicles and exchange stations, for their evaluating and for controlling the operation and also includes a central database of vehicles, energy storages and exchange stations, and the central (1) is duplexly connected with the control computer (2) of the exchange station and with the communication module (3) in the vehicle and the control computer (2) of the exchange station is equipped with a control software for collecting the data of the exchange station, for their evaluating and for controlling operation of the exchange station and it is duplexly connected with peripheral devices of the station and controls all electrical systems of the exchange station on the basis of the inputs from the peripheral devices.

## Description

### Technical field

The invention relates to an energy storage exchange system designed for use mainly for electric vehicles with exchangeable energy storages.

### Background art

Exhaustibility of oil reserves leads to the need to find alternative solutions for propulsion in transport, which would be also environmentally friendlier. One such solution is electric vehicles (battery cars), which use for propulsion energy from renewable sources, do not produce primary emissions and have low operating costs. Electric vehicles are propelled by an electric motor, which is supplied by electrical energy stored in the traction battery. The battery must be charged before drive and the range of electric vehicle depends on the capacity of battery.

Although the development of traction batteries was significant in last few years, the ability of fast charging is still not sufficient for longer travels. There is a need to find a way to get electric vehicles travelling range comparable with that of combustion engine vehicles. One strategy is to increase energy of the traction battery, but several disadvantages is connected with this, for example higher weight of vehicle, which leads to increased energy consumption and also high initial investment. Increased range of vehicle by means of increasing energy in battery often leads to the price several times higher than price of all other components of vehicle.

This situation leads to the innovations in the field of battery exchange. In today's world, there are several technical solutions concerning traction battery exchange. There are solutions in which the traction batteries exchange is operated completely manually. The disadvantages are the need for high level of expertise of person who exchanges the batteries and unreliability. Most of the developed systems are aimed at fully automatic traction battery exchange by means of robotic systems. That requires a high level of automation, and in consequence of that input costs on infrastructure as well as total time of implementing the technology into practice rise. In this case, further disadvantage is a need of precise parking of the vehicle. Patent document EP 2 397 383 Al describes a battery exchange station, where a discharged battery is removed from an electric vehicle and a charged battery is inserted into it. Battery exchange is realized by an automated robotic system. The insertion and removal of the battery is done vertically, i.e., into and out of the bottom of the vehicle. The battery exchange system is located in a service bay under the vehicle.

Patent document US 8006793 B2 describes electric vehicle battery system. The electric vehicle includes a battery pack that can be exchanged at a battery exchange station. At the battery exchange station, an at least partially spent battery pack is exchanged for an at least partially charged battery pack. A battery bay is configured to be disposed at an underside of the electric vehicle. The battery bay includes a frame which defines a cavity. The cavity is configured to at least partially receive the battery pack therein. The battery bay comprises at least one latch rotatably pivoted about an axis substantially parallel with a plane formed by the underside of the vehicle. The latch is configured to lift, retain the battery pack at least partially within the cavity.

The aim of this invention is to provide a functional and simple semi-automatic solution of traction battery exchange, which minimizes input costs and manual inputs in the traction battery exchange. Battery exchange itself is realized manually with the assistance of electronic systems, sensors and locks so that the person with a minimum level of expertise could realize it. Time limit of exchange should not exceed seven minutes.

### Nature of the invention

The abovementioned deficiencies are substantially removed by energy storage exchange system according to this invention, designed for use mainly for electric vehicles with exchangeable energy storages, where the energy storage exchange is realized manually and which includes:
- a communication system comprising:
   i. a central with central computer,
   ii. a control computer of an exchange station,
   iii. a vehicle communication module,
- at least one exchange station comprising:
   i. at least one parking place,
   ii. at least one energy storage,
   iii. at least one forklift for manual energy storage exchange,
   iv. electrical peripheral devices, which are at least one energy storage frame containing charging device and at least one charging slot,
      and an energy storage support frame designed for connection with the vehicle.

The central computer of central is equipped with a software for collecting the data from vehicles and exchange stations, for their evaluating and for controlling the operation and also includes a central database of vehicles, energy storages and exchange stations. The central has an operator. The central is duplexly connected with the control computer of the exchange station and with the communication module in the vehicle. The control computer of the exchange station is equipped with a control software for collecting the data of the exchange station, for their evaluating and for controlling the operation of the exchange station and it is duplexly connected with peripheral devices of the station and controls all electrical systems of the exchange station on the basis of the inputs from the peripheral devices. Connection between the exchange station and the vehicle at the energy storage exchange is indirect and it is provided by a driver of the vehicle.

The control computer of the exchange station provides the data collecting from the exchange station. These data include login by means of radio frequency identification, number of the energy storages in the station, the charging state of each energy storage and the station problems and warnings. These data are subsequently shared with the central system. In case of communication failure between the exchange station and the central system, the control computer of the station stores the data until the communication is renewed. The control computer of the exchange station also controls all electrical systems of the exchange station on the basis of inputs from peripheral devices, mainly unlocks and locks doors of the exchange station, initiates, completes or interrupts charging process. By means of the information panel of the exchange station it displays information about free slot for the discharged energy storage in the exchange station, about the prepared energy storage for the vehicle. Further important tasks for the central computer of the exchange station are: communication with the central system, sharing information about the energy storages, their charging state and charging error messages, etc..

Energy storage exchange in the station is realized manually with the assistance of electronic systems, sensors and locks. All parts of the station are connected to the control computer, which controls tasks of the station, as, for example, receiving the empty energy storage, releasing the fully charged energy storage from the station and informing operating personal about the status and further steps.

The energy storage is a traction battery itself or an enclosed container which includes a traction battery, a mechanical and electronic locking mechanism, a safety relay, a fuse, a power and communication interface and a battery management. The energy storage is preferably placed in the carrier, by which better manipulation is provided.

It is particularly preferred if the communication module in the vehicle includes the information panel of the vehicle. On the basis of information from the central, the communication module in the vehicle warns a driver of low energy level in the energy storage and informs a driver about the route to the exchange station prepared to deliver the charged energy storage. The information panel of the vehicle displays to at least following basic information to a driver: indicative range, energy in the energy storage, state of the vehicle, state of battery management, average energy consumption (%/km), energy consumption in kWh, time to full charge of the energy storage. The communication module of the electric vehicle sends this information to the central system in defined time moments. If the communication is interrupted, the communication module is able to store the data until the communication with the central system is renewed. Complete communication is realized as "hand-shake", thus the system is informed after data transfer is successfully finished and the redundant data from the system are deleted.

The charging slot is the part of the energy storage frame, where the empty energy storage is charged and subsequently stored. The main parts of the charging slot for the energy storages are: a power and data connector, a position sensor, an electronically controlled lock, a mechanical lock, a charging device and a safety circuit.

The frame is located inside the container part of the station, and is reliably protected against influence of weather, access of unauthorized persons and vandalism. The frame is mainly used for charging the energy storages and their storage after charging. The energy storage frame preferably contains a safety circuit. The energy storage frame has preferably at least four charging slots.

The energy storage carrier is preferably equipped with small wheels, a mechanical locking mechanism and a rail system allowing the energy storage exchange without additional mounting.

The energy storage support frame is designed for connection with the vehicle and serves as connecting element between the vehicle and the exchangeable energy storage. It preferably includes a frame construction, a power and data device, sensors, an electronically controlled lock and a mechanical lock. For easier manipulation, it is equipped with rails on both sides of the construction.

The forklift is equipped with a transport tool for transport of the energy storage between the vehicle and charging slot.

The exchange station is an object for exchange and charging of the energy storages. According to the preferred embodiment, the exchange station is a container. It is preferred, if the exchange station contains at least three energy storage frames.

Preferably, an identification number is assigned to the each vehicle in a central database of vehicles.

The entrance into the exchange station is secured by an identification system, which allows entry only to authorized persons.

It is preferred, if the exchange station is secured by a security system and a fire protection. It is also preferred, if the parking place is covered and if the exchange station has a toilet.

The electric vehicle is equipped with an electric motor, the energy storage, a data collection system, GPS with stored locations of the exchange stations, a logbook, an energy storage charging book and the information panel of the vehicle.

The central collects the data from all participants of communication. It works as a register of all vehicles, energy storages and exchange stations, which have assigned identifier in the central database. These data are used for smooth operation, problem elimination and evaluating the occupancy of individual exchange stations. They also may contribute to the subsequent development of exchange station infrastructure itself. Further, monitoring and controlling the situation across whole network of exchange stations can help to evolve the system according to demands of drivers and stations occupancy.

Exchange station operation is divided into several simple steps. Although the energy storage exchange itself is realized manually, straightforward solution of exchange ensures safety and the whole procedure is easy to learn. Description of the process in the station is as follows:
- The communication module of the vehicle warns a driver about low energy level in the energy storage in time.
- The system calculates alternate route to the destination with the exchange station prepared to deliver the energy storage.
- A driver may follow the instruction of the system in vehicle communication module or may choose another exchange station.
- A driver arrives with vehicle to the covered parking place at the exchange station.
- A driver is identified to the system by radio frequency identification.
- The exchange station informs a driver which slot is prepared for his discharged energy storage by means of the information panel of exchange station.
- The exchange station opens the doors with the forklift and the free slot.
- A driver releases the manual lock with the sensor and also the electronic lock in the vehicle by turning the key, and by that the energy storage is released. A driver removes the energy storage from the vehicle by forklift.
- A driver inserts the energy storage into free slot of station by forklift.
- The energy storage is locked with the electronic lock.
- A driver locks the manual lock of the slot.
- The station subsequently informs about the prepared energy storage.
- In case that fully charged energy storage is situated behind the same door as that, which is actually open, a permission to take this energy storage is granted by station to a driver. If the fully charged energy storage is situated behind another door, the station at first closes the open door. Subsequently it opens corresponding door and visually marks the prepared energy storage.
- To release the energy storage, it is necessary to unlock the manual lock.
- Then the exchange station unlocks the electronic lock and a driver can transfer the energy storage by the forklift.
- A driver places the charged energy storage into the vehicle.
- The Electronic lock is automatically locked and a driver locks the mechanical lock, ensuring the right position of the energy storage in vehicle.
- A driver gives back the forklift.
- The exchange station confirms the successful completion of exchange with radio frequency identification.
- The system understands and closes the station.
- The station signalization allows departure of the vehicle.

Energy storage exchange is manual, with the assistance of the electronic systems. It is realized without the need of precise parking of the vehicle and without need of special tools for mounting or dismounting the energy storage. The system provides protection against vandalism using radio frequency identification. The system also provides protection against short-circuit, under-voltage, over-voltage, invalid energy storage position during charging and against fire of energy storage. Modular structure of the exchange station will reduce the initial costs. The invention allows next modular development on the basis of the occupancy of the station in the given location. Advantages of this invention are functional and simple semi-automatic solution of energy storage exchange, which minimizes input costs and manual inputs at the energy storage exchange. Energy storage exchange itself is realized manually with the assistance of the electronic systems, the sensors and the locks, so that the person with a minimum level of expertise could realize the exchange.

### Brief description of figures in drawings

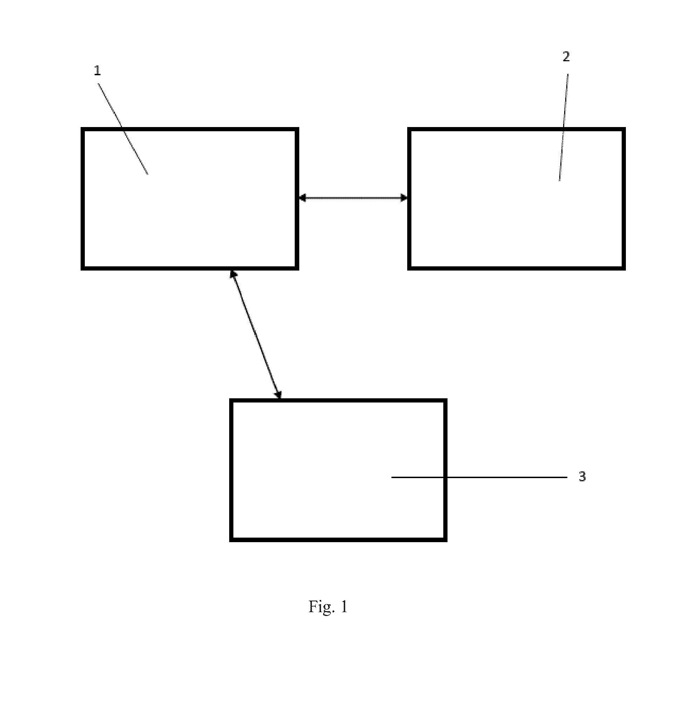

Fig. 1 shows the connection schema of energy storage exchange system.

### Examples of embodiment

The energy storage exchange system with the traction batteries designed for use mainly for electric vehicles with exchangeable energy storages, where the energy storage exchange is realized manually was constructed and it includes:
- the communication system comprising the central 1 with an operator and the central computer, the control computers 2 of exchange stations and the vehicle communication modules 3,
- several exchange stations comprising the covered parking place, several energy storages with the traction batteries, the forklift, several frames for the energy storages with the traction batteries containing the charging device and four charging slots for the energy storages with the traction batteries and
- the energy storage support frames designed for connection with the vehicle.

The central computer of the central 1 is equipped with software for collecting the data from vehicles and exchange stations, for their evaluating and for controlling the operation and also includes the central database of vehicles, energy storages and exchange stations. The central 1 is duplexly connected with the control computer 2 of the exchange station and with the communication module 3 in the vehicle. The control computer 2 of the exchange station is equipped with control software for collecting the data of the exchange station, for their evaluating and for controlling the operation of the exchange station and is duplexly connected with the peripheral devices of the station and controls all electrical systems of the exchange station on the basis of the inputs from the peripheral devices.

The control computer 2 of the exchange station unlocks and locks the doors of the exchange station, initiates, completes or interrupts charging process and by means of the information panel of the exchange station it displays information about the free slot for the discharged energy storage in the exchange station and about the prepared energy storage for the vehicle. The communication modules 3 in the vehicles include the information panel of the vehicle. On the basis of information from the central 1, the communication module 3 in the vehicle warns a driver of low energy level in the energy storage and informs a driver about the road to the exchange station, which is prepared to deliver the charged energy storage with the traction battery.

Main parts of the charging slot are: the power and data connector, the position sensor, the electronically controlled lock, the mechanical lock, the charging device and the safety circuit. The energy storage frame contains safety circuit and has at least four charging slots.

The energy storage has the traction battery, the electronic locking mechanism, the mechanical locking mechanism, the safety relay, the fuse, the power and communication interface and the battery management, wherein the energy storage is placed in the carrier. The energy storage carrier is equipped with the small wheels, the mechanical locking mechanism and the rail system allowing the energy storage exchange without additional mounting. The energy storage support frame includes the frame construction, the power and data device, the sensors, the electronically controlled lock and the mechanical lock and is equipped with the rails on both sides of the construction. The forklift is equipped with the transport tool for transport of the energy storage with the traction battery between the vehicle and the charging slot.

The exchange station is the container. The exchange station includes three energy storage frames.

An identification number is assigned to the each vehicle in a central database of vehicles. The entrance into the exchange station is secured by the identification system, which allows entry only to authorized persons. Exchange station is secured by the security system and the fire protection and contains the toilet.

The energy storage exchange is realized manually with the assistance of the electronic safety systems. Maximal time limit for exchange is 7 minutes. Precise parking of the vehicle is not required.

## Claims

1. Energy storage exchange system designed for use mainly for electric vehicles with exchangeable energy storages, where energy storage exchange is realized manually, **characterized in that** it includes:
- a communication system comprising:
i. a central (1) with central computer,
ii. a control computer (2) of an exchange station,
iii. a vehicle communication module (3),
- at least one exchange station comprising:
i. at least one parking place,
ii. at least one energy storage,
iii. at least one forklift for manual energy storage exchange,
iv. electrical peripheral devices, which are at least one energy storage frame containing charging device and at least one charging slot,
- an energy storage support frame designed for connection with the vehicle,
wherein the central computer of central (1) is equipped with a software for collecting the data from vehicles and exchange stations, for their evaluating and for controlling the operation and also includes a central database of vehicles, energy storages and exchange stations, wherein the central (1) is duplexly connected with the control computer (2) of the exchange station and with the communication module (3) in the vehicle and the control computer (2) of the exchange station is equipped with a control software for collecting the data of the exchange station, for their evaluating and for controlling operation of the exchange station and it is duplexly connected with peripheral devices of the station and controls all electrical systems of the exchange station on the basis of the inputs from the peripheral devices.

2. Energy storage exchange system according to claim 1, **characterized in that** the energy storage is a traction battery itself or an enclosed container which includes a traction battery, an electronic locking mechanism, a mechanical locking mechanism, a safety relay, a fuse, a power and communication interface and a battery management, wherein the energy storage is placed in a carrier.

3. Energy storage exchange system according to any one of claims 1 to 2, **characterized in that** the communication module (3) in the vehicle includes an information panel of vehicle.

4. Energy storage exchange system according to any one of claims 1 to 3, **characterized in that** the control computer (2) of the exchange station is dedicated mainly to unlocking and locking doors of the exchange station, initiating, completing or interrupting of charging process and for providing information by means of the information panel of the exchange station, especially about the free slot for the discharged energy storage in the exchange station and about the prepared energy storage for the vehicle.

5. Energy storage exchange system according to any one of claims 1 to 4, **characterized in that** on the basis of information from the central (1), the communication module (3) in the vehicle is designed to warn driver of low energy level in the energy storage, to inform driver about the route to the exchange station, which is prepared to deliver the charged energy storage.

6. Energy storage exchange system according to any one of claims 1 to 5, **characterized in that** the main parts of the charging slot are: a power and data connector, a position sensor, an electronically controlled lock, a mechanical lock, a charging device and a safety circuit.

7. Energy storage exchange system according to any one of claims 1 to 6, **characterized in that** the energy storage frame contains a safety circuit.

8. Energy storage exchange system according to any one of claims 1 to 7, **characterized in that** the energy storage frame has at least four charging slots.

9. Energy storage exchange system according to any one of claims 1 to 8, **characterized in that** the energy storage carrier is equipped with small wheels, a mechanical locking mechanism and a rail system allowing energy storage exchange.

10. Energy storage exchange system according to any one of claims 1 to 9, **characterized in that** the energy storage support frame includes a frame construction, a power and data device, sensors, an electronically controlled lock and a mechanical lock and it is equipped with rails on both sides of the construction.

11. Energy storage exchange system according to any one of claims 1 to 10, **characterized in that** the forklift is equipped with a transport tool for transport of the energy storage between the vehicle and the charging slot.

12. Energy storage exchange system according to any one of claims 1 to 11, **characterized in that** the exchange station contains at least three energy storage frames.

13. Energy storage exchange system according to any one of claims 1 to 12, **characterized in that** an identification number is assigned to each vehicle in a central database of vehicles.

14. Energy storage exchange system according to any one of claims 1 to 13, **characterized in that** the exchange station is secured by an identification system for entry into the exchange station and/or a security system and/or a fire protection.

15. Energy storage exchange system according to any one of claims 1 to 14, **characterized in that** the parking place is covered.
